# EUROPEAN PATENT SPECIFICATION

(11) **EP 0 400 225 B1**
(45) Date of publication and mention of the grant of the patent: **18.01.1995**
(21) Application number: 89304668.0
(22) Date of filing: 09.05.1989
(51) Int. Cl.: C08G 75/02

(54) **Process for preparation of polyphenylene sulfide copolymer**
Verfahren zur Herstellung von Polyphenylensulfidcopolymeren
Procédé de préparation de copolymères de sulfure de polyphénylène

(43) Date of publication of application: 05.12.1990
(73) Proprietor: Tohpren Co., Ltd., Kimitsu-gun Chiba (JP)
(72) Inventor: Shinohara, Shuya, Chiba-shi Chiba (JP); Asakage, Hideyasu, Kisarazu-shi Chiba (JP); Nakamura, Yoshiaki, Chiba-shi Chiba (JP)
(74) Representative: Arthur, Bryan Edward

(56) References cited:
- EP-A- 0 040 747
- EP-A- 0 166 451
- EP-A- 0 223 099
- EP-A- 0 257 228
- DE-A- 3 725 997
- US-A- 3 869 434

## Description

### BACKGROUND OF THE INVENTION

### (1) Field of the Invention

The present invention relates to a process for the preparation of a polyphenylene sulfide copolymer. More particularly, the present invention relates to a process for the preparation of a copolymer having a high block copolymerization ratio and comprising p-phenylene sulfide units and m-phenylene sulfide units.

The polyphenylene sulfide copolymer prepared by the present invention retains the excellent heat resistance and strength characteristics inherently possessed by a polyphenylene sulfide resin and is valuably used as a film, a sheet, a fiber, a coating, an extrusion shaping material, an injection molding material, a paint and the like.

### (2) Description of the Related Art

Many patents have been granted to inventions concerning p-phenylene sulfide homopolymers (see, for example, Japanese Examined Patent Publication No. 45-3368, Japanese Examined Patent Publication No. 48-16078 and Japanese Examined Patent Publication No. 52-12240), and a p-phenylene sulfide/m-phenylene random copolymer is reported in Japanese Examined Patent Publication No. 52-12239.

A p-phenylene sulfide homopolymer is a crystalline polymer, and since the heat resistance is improved by increasing the degree of crystallization, the practical application temperature can be elevated. Nevertheless, the p-phenylene sulfide homopolymer has a problem in that the rate of crystallization is too high at the processing , and thus the processing becomes difficult. For example, where the homopolymer is extrusion-shaped into a sheet-like form by a T-die for the production of a film, crystallization takes place just after the extrusion and it is difficult to obtain a stable sheet. A similar phenomenon occurs at the melt-spinning for formation of a fiber, at the curing of a paint, and at the quenching of an extrusion-shaped product.

In a p-phenylene sulfide/m-phenylene sulfide random copolymer, the melting point is drastically lowered with an increase of the content of the m-phenylene sulfide units, and simultaneously, the copolymer becomes amorphous and the heat resistance is degraded, and, thus a problem arises with respect to practical use.

As the phenylene sulfide polymer having none of the foregoing defects, a p-phenylene sulfide/m-methaphenylene sulfide block copolymer has been proposed in Japanese Unexamined Patent Publication No. 61-14228, and the following three processes are disclosed as the process for the preparation of this copolymer.
(1) A m-dihalobenzene is added to a reaction liquid containing a p-phenylene sulfide polymer comprising units of 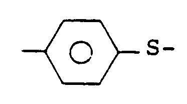 and reaction is carried out in the presence of an alkali metal sulfide to obtain a block copolymer.
(2) A reaction liquid containing a m-phenylene sulfide polymer comprising units of 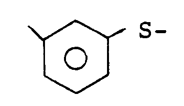 is added to a reaction liquid containing a p-phenylene sulfide polymer comprising units of 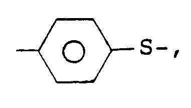 and these liquids are reacted to obtain a block copolymer.
(3) A p-dihalobenzene is added to a reaction liquid containing a m-phenylene sulfide polymer comprising units of 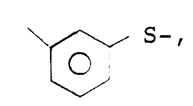 and reaction is carried out in the presence of an alkali metal sulfide to obtain a block copolymer. In these three processes, however, the polymerization step requiring a high temperature of 210 to 250°C and a reaction time of 4.5 to 20 hours must be repeated at least twice, the production efficiency is low, and these processes are not practical. Moreover, these processes have a problem in that it is very difficult to obtain a precise delivery and metering of the reaction liquid slurry. Moreover, the polymers prepared by these processes cannot be regarded as complete block copolymers; namely, it is considered that these polymers comprise mixtures of a p-phenylene sulfide homopolymer, a block copolymer, and a m-phenylene sulfide homopolymer.

### SUMMARY OF THE INVENTION

The primary object of the present invention is to provide a process for the preparation of a copolymer having a high block copolymerization ratio and comprising p-phenylene sulfide units and m-phenylene sulfide units, by which the intended copolymer can be obtained by carrying out the charging and reaction once, i.e., the problem of repeating the reaction step at least twice as in the conventional technique is eliminated.

The present inventors carried out research with a view to solving the foregoing problem, and as a result, found that, when di-halo-aromatic compounds are reacted with an alkali metal sulfide in an aprotic polar solvent, a difference occurs in the reactivity between a p-dihalo-aromatic compound and a m-dihalo-aromatic compound. More specifically, the m-dihalo-aromatic compound has a higher reactivity than that of the p-dihalo-aromatic compound and is reacted at a relatively low temperature.

More specifically, in accordance with the present invention, there is provided a process for the preparation of a copolymer having a high block copolymerization ratio and comprising p-phenylene sulfide units and m-phenylene sulfide units, which comprises charging collectively a p-dihalo-aromatic compound and a m-dihalo-aromatic compound into an alkali metal sulfide in the presence of an aprotic polar organic solvent, reacting at least 50 mole% of the charged m-dihalo-aromatic compound at a temperature of from 130 to 170°C where only the m-dihalo-aromatic compound is mainly reacted, and then completing the reaction at a temperature of at least 172°C but not higher than 280°C.

### DESCRIPTION OF THE PREFERRED EMBODIMENTS

In connection with the difference in the reactivity of the m-dihalo-aromatic compound and the p-dihalo aromatic compound, the following experimental results were obtained. An autoclave having an inner volume of 1 liter was charged with 1 mole of 60% sodium sulfide and 400 g of N-methylpyrrolidone (hereinafter referred to as "NMP"), and the temperature was elevated while purging with nitrogen to effect dehydration. Then, the mixture was cooled to 170°C, 1 mole of p-dichlorobenzene was added, and reaction was carried out at 180°C for 5 hours. After the reaction, NMP in the reaction liquid was analyzed by gas chromatography, and the conversion of p-dichlorobenzene was determined from the amount of the remaining unreacted p-dichlorobenzene. The conversion of m-dichlorobenzene was determined in the same manner as described above, and it was found that the conversion of p-dichlorobenzene was 43.4% and the conversion of m-dichlorobenzene was 78.2%.

To examine the reaction-initiating temperature and the reaction-terminating temperature with respect to the reaction of m-dichlorobenzene and p-dichlorobenzene with an alkali metal sulfide, an equimolar mixture of sodium sulfide dehydrated in NMP under the above-mentioned conditions and m-dichlorobenzene (or p-dichlorobenzene) was prepared and charged in a pressure vessel for a differential scanning calorimeter (DSC). For the DSC analysis, the temperature was elevated at a rate of 0.41°C/min between 100°C and 200°C and at a rate of 0.33°C/min between 200°C and 250°C. When the temperature reached 250°C, this temperature was maintained. The results are shown in Table 1.

**Table 1**

| | Temperature of Initiation of Violent Exothermic Reaction | Peak Temperature of Heat Generation |
|---|---|---|
| m-Dichlorobenzene | 141 to 147°C | 206°C |
| p-Dichlorobenzene | 172 to 189°C | 231°C |

From the foregoing results, it can be understood that p-dichlorobenzene is not substantially reacted at temperatures lower than 172°C, and only m-dichlorobenzene is reacted. Accordingly, even though p- and m-dihalo-aromatic compounds are collectively charged, if the initial reaction temperature is adjusted to within the range where the p-dihalo-aromatic compound is not substantially reacted, i.e., 130 to 170°C, preferably 140 to 170°C, the intended object can be obtained.

The conversion of the m-dihalo-aromatic compound at the initial temperature is preferably rendered high, but if at least 50 mole% of the charged m-dihalo-aromatic compound is reacted at the initial temperature, a great reduction of the melting point of the obtained copolymer can be avoided. The conversion of the charged m-dihalo-aromatic compound can be determined from the quantity of heat generated by the above-mentioned DSC analysis method.

After completion of the reaction at the initial temperature, to mainly react the p-dihalo-aromatic compound, the reaction must be carried out at a higher temperature. More specifically the reaction is carried out at a temperature of at a least 172°C but not higher than 280°C, preferably a temperature of at least 172°C but not higher than 260°C. In general, preferably the temperature is elevated at a predetermined rate from 170°C, and after the temperature is elevated to a predetermined level, this temperature is maintained until heat is no longer generated.

The reaction time at the initial temperature depends on the amount of the charged m-dihalo-aromatic compound, but preferably this reaction time is 3 to 25 hours. It is sufficient if the time of the latter stage reaction at a temperature of at least 172°C but not higher than 280°C is 4 to 10 hours.

In the copolymer obtained by the process of the present invention, preferably the ratio between the p-phenylene sulfide units 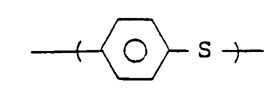
and the m-phenylene sulfide units 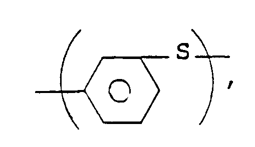
that is, the charged molar ratio between the p-dihalo-aromatic compound and the m-dihalo-aromatic compound, is such that the amounts of the p-dihalo aromatic compound and m-dihalo-aromatic compound are 40 to 95% by mole, more preferably 60 to 95% by mole, and 5 to 60% by mole, more preferably 5 to 40% by mole, respectively, based on the total of these two compounds. If the content of the m-phenylene disulfide units in the copolymer is lower than 5 mole%, the intended effect, i.e., lowering of the crystallization temperature, cannot be obtained, and if the content of the m-phenylene sulfide units exceeds 60 mole%, the Tm of the copolymer greatly lowered and a good heat resistance cannot be maintained.

At least one kind of recurring units other than the p-phenylene sulfide units and m-phenylene sulfide units can be introduced in an amount of up to 10 mole% by copolymerization, so far as the intended object of the present invention can still be obtained. As such units, there can be mentioned bifunctional units such as 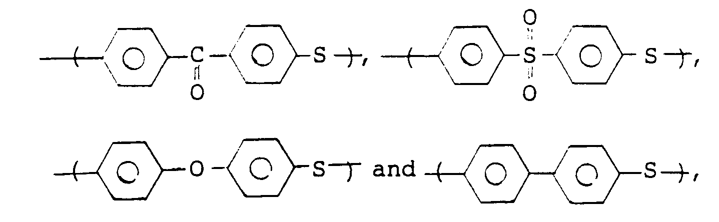
trifunctional units such as 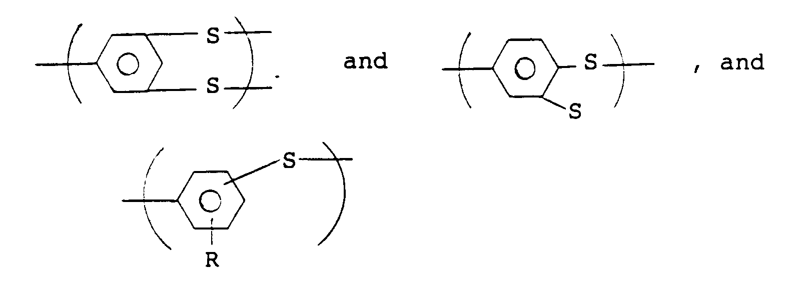
(in which R stands for an alkyl group, a nitro group, a phenyl group, an alkoxy group, a carboxylic acid group or a salt thereof).

As the aprotic polar organic solvent used as a reaction medium in the present invention, aprotic polar organic solvents having an amide bond in the molecule, such as hexamethylphosphoramide, dimethylsulfoxide, dimethylacetamide, N-allyl-lactam, and N,N-dialkylimidazolidinone, are preferable. Among them, N-alkyl-lactam is more preferable and N-methylpyrrolidone is most preferred. The amount of the aprotic polar organic solvent used is usually from 100 to 2000 ml per mole of the dihalo aromatic compounds.

In the process for the preparation of the copolymer according to the present invention, a known polymerization assistant can be used. As the polymerization assistant, there have been proposed not only alkali metal carboxylates disclosed in Japanese Examined Patent Publication No. 52-12240, but also various other substance such as alkali metal alkylbenzene-sulfonates, alkali metal salts of polybasic aromatic carboxylic acids, alkali metal tertiary phosphates and alkali metal salts of phenolic aromatic sulfonic acids. Furthermore, a method can be adopted in which the amount of water is increased at the latter stage of the polymerization reaction, as taught in Japanese Unexamined Patent Publication No. 61-7332.

After termination of the reaction, the obtained copolymer is separated from an alkali metal halide such as sodium chloride formed as the by-product and is purified. The separation and purification can be carried out by known techniques. Furthermore, the obtained polymer can be heat-treated, if necessary, to effect partial crosslinking, and this partial cross-linking is included within the scope of the present invention.

The copolymer obtained according to the process of the present invention is a polymer having a high block polymerization ratio, and in principle, it is considered that the copolymer is a mixture comprised of a predominant amount of a meta-/para-block copolymer, and minor amounts of a meta-homo-polymer and a para-homopolymer. Formation of the block copolymer is confirmed by the temperature at which the turbidity occurs due to precipitation of the polymer when a small amount of the obtained copolymer is dissolved in α-chloronaphthalene at about 230°C and the solution is gradually cooled. The precipitation temperature of the para-homopolymer is about 160°C, and the precipitation temperatures of the random and block copolymers differ to some extent, according to the copolymerization ratio, but are from about 100 to about 120°C. The precipitation temperature of the meta-homopolymer is about 30 to about 50°C. Note, this confirmation method is not precise in the case of a mixture. In practice, the judgement is preferably made by measuring the content of the m-phenylene sulfide units in the copolymer by infrared absorption spectroscopy, and measuring the Tm and Tc by the DSC method.

According to the process of the present invention, a meta-/paracopolymer having a high block polymerization ratio can be prepared substantially by one charging and reaction.

The process of the present invention will now be described in detail with reference to the following examples.

### Example 1

An autoclave having an inner volume of 1 liter and equipped with a stirrer was charged with 91 g (0.7 mole) of 60% sodium sulfide and 200 g of N-methylpyrrolidone, the temperature was elevated to 205°C over a period of about 2 hours under a nitrogen current to effect dehydration, the mixture was then rapidly cooled to 150°C, and 76.5 g (0.52 mole) of p-dichlorobenzene, 26.3 g (0.179 mole) of m-dichlorobenzene and 80 g of N-methylpyrrolidone were added. The inner pressure was raised to 1 kg/cm²G with nitrogen gas, and reaction was carried out for 8 hours at an initial temperature at least 165 but lower than 170°C, and the temperature was then elevated to 260°C at a rate of 0.3°C/min. The reaction mixture was maintained at 260°C for 1 hour and then cooled, NMP was removed by filtration, and the residual cake was washed 5 times with 300 ml of hot water and once with 300 ml of acetone, and then dried to obtain a white powdery copolymer A.

### Example 2

A copolymer B was prepared in the same manner as described in Example 1 except that 66.9 g (0.455 mole) of p-dichlorobenzene and 36.7 g (0.249 mole) of m-dichlorobenzene were used, the reaction was conducted at an initial temperature of 160 to 165°C for 12 hours, the temperature then elevated to 250°C at a rate of 0.3°C/min, and the reaction carried out at 250°C for 2 hours.

### Example 3

A copolymer C was prepared in the same manner as described in Example 1 except that 92.17 g (0.627 mole) of p-dichlorobenzene, 10.29 g (0.07 mole) of m-dichlorobenzene, 0.38 g (0.002 mole) of 1,2,4-trichlorobenzene and 28.7 g (0.35 mole) of anhydrous sodium acetate as the polymerization assistant were used , the reaction was carried out at an initial temperature of 160 to 165°C for 5 hours, the temperature then elevated to 260°C at a rate of 0.3°C/min, and the reaction carried out at this temperature for 2 hours.

### Comparative Example 1 (Random copolymer)

The charged components were the same as in Example 1, but the initial reaction was not carried out and the temperature was elevated from 150°C to 250°C at a rate of 0.3°C/min, the reaction mixture maintained at 250°C for 4 hours, and then cooled. The other conditions were the same as in Example 1, and thus a copolymer D was obtained.

### Comparative Example 2 (Block Copolymer)

A block copolymer was prepared in the following manner according to the teaching of Japanese Unexamined Patent Publication No. 61-14228. A mixture of 385 g of NMP and 91 g of 60% sodium sulfide was heated at about 200°C to effect dehydration. Then, 102.9 g of p-dichlorobenzene and 108 g of NMP were charged and, after replacing the atmosphere with N₂ , the reaction was carried out at 210°C for 4 hours. Then 33 g of water was added and the reaction was further conducted at 250°C for 0.5 hour to obtain a reaction mixture liquid E-1.

Separately, a mixture of 385 g of NMP and 91 g of 60% sodium sulfide was heated at about 200°C to effect dehydration. Then, 102.9 g of m-dichlorobenzene and 108 g of NMP were charged and, after replacing the atmosphere with N₂ , the reaction was carried out at 210°C for 8 hours.

Then 33 g of water was added and the reaction was carried out at 250°C for 0.5 hour to obtain a reaction mixture liquid E-2, the reaction mixture liquid E-1 and the reaction mixture liquid E-2 were charged at a ratio of 352 g/118 g, and the reaction was carried out at 250°C for 20 hours to obtain a copolymer E.

The physical properties of the polymers obtained in the foregoing examples are shown in Table 2.

**Table 2**

| | Example 1 | Example 2 | Example 3 | Comparative Example 1 | Comparative Example 2 |
|---|---|---|---|---|---|
| Copolymer | A | B | C | D | E |
| Reduced viscosity | 0.19 | 0.19 | 0.26 | 0.16 | 0.24 |
| p/m copolymerization ratio | 76/24 | 66/34 | 88/12 | 77/23 | 74/26 |
| Fractionation temperature (°C) | 108 | 98 | 125 | 103 | 112 |

| Results of DSC measurement | | | | | |
|---|---|---|---|---|---|
| Tg | 68 | 62 | 83 | 48 | 73 |
| Tm | 274 | 262 | 279 | 205 | 275 |
| Tc₂ | 175 | 168 | 213 | 160 | 173 |

### Measurement Methods

### Reduced viscosity ηsp/c:

Measured at 206°C with respect to a solution of 0.4 g polymer α-chloronaphthalene.

### p/m Copolymerization ratio:

Determined by the IR spectroscopy.

### Fractionation temperature:

The temperature at which precipitation, i.e., turbidity occurs from a solution in α-chloronaphthalene.

### DSC Measurement conditions:

Temperature-elevating rate of 20°C/min, held for 5 minutes at 330°C, and cooling rate of 10°C/min.
- Tg:: glass transition temperature
- Tm:: melting peak temperature
- Tc2:: crystallization peak temperature

## Claims

1. A process for the preparation of a copolymer having a high block copolymerization ratio and comprising p-phenylene sulfide units and m-phenylene sulfide units, which comprises charging collectively a p-dihalo-aromatic compound and a m-dihalo-aromatic compound into an alkali metal sulfide in the presence of an aprotic polar organic solvent, reacting at least 50 mole% of the charged m-dihalo-aromatic compound at a temperature of from 130° to 170°C where only the m-dihalo-aromatic compound is mainly reacted, and then completing the reaction at a temperature of at least 172°C but not higher than 280°C.

2. A process according to claim 1, wherein the amounts of the p-dihalo-aromatic compound and the m-dihalo-aromatic compound are 40 to 95% by mole and 5 to 60% by mole, respectively, based on the total of the two compounds.

3. A process according to claim 1, wherein the amounts of the p-dihalo-aromatic compound and the m-dihalo-aromatic compound are 60 to 95% by mole and 5 to 40% by mole, respectively, based on the total of the two compounds.

4. A process according to claim 1, wherein the p-dihalo-aromatic compound and m-dihalo-aromatic compound are p-dichlorobenzene and m-dichlorobenzene, respectively.

5. A process according to claim 1, wherein the reaction is carried out at a temperature of from 140°C to 170°C in the first stage and at a temperature of from 172°C to 260°C in the second stage.

## Patentansprüche

1. Verfahren zur Herstellung eines Copolymers mit hohem Blockpolymerisierungsverhältnis, das p-Phenylensulfideinheiten und m-Phenylensulfideinheiten umfaßt, das gemeinsames Einspeisen einer aromatischen p-Dihalogenverbindung und einer aromatischen m-Dihalogenverbindung in ein Alkalimetallsulfid in Gegenwart einer aprotischen polaren organischen Lösungsmittels, Umsetzen von mindestens 50 Mol% der eingespeisten aromatischen m-Dihalogenverbindung bei einer Temperatur von 130° bis 170°C, wobei hauptsächlich die aromatische m-Dihalogenverbindung umgesetzt wird, und dann Vervollständigen der Umsetzung bei einer Temperatur von mindestens 172°C, aber nicht höher als 280°C umfaßt.

2. Verfahren gemäß Anspruch 1, bei dem die Mengen der aromatischen p-Dihalogenverbindung und der aromatischen m-Dihalogenverbindung 40 bis 95 Mol% beziehungsweise 5 bis 60 Mol%, basierend auf dem Gesamtgehalt der beiden Verbindungen, betragen.

3. Verfahren gemäß Anspruch 1, bei dem die Mengen der aromatischen p-Dihalogenverbindung und der aromatischen m-Dihalogenverbindung 60 bis 95 Mol% beziehungsweise 5 bis 40 Mol%, basierend auf dem Gesamtgehalt der beiden Verbindungen, betragen.

4. Verfahren gemäß Anspruch 1, bei dem die aromatische p-Dihalogenverbindung und die aromatische m-Dihalogen-verbindung p-Dichlorbenzol beziehungsweise m-Dichlorbenzol sind.

5. Verfahren gemäß Anspruch 1, bei dem die Umsetzung bei einer Temperatur von 140°C bis 170°C im ersten Schritt und bei einer Temperatur von 172°C bis 260°C im zweiten Schritt durchgeführt wird.

## Revendications

1. Procédé pour la préparation d'un copolymère ayant un rapport de copolymérisation en bloc élevé et comprenant des unités de sulfure de p-phénylène et des unités de sulfure de m-phénylène, qui comprend le chargement collectif d'un composé p-dihalo-aromatique et d'un composé m-dihalo-aromatique dans un sulfure de métal alcalin en présence d'un solvant organique polaire neutre, la réaction d'au moins 50 moles % du composé m-dihalo-aromatique chargé à une température de 130° à 170°C lorsque seulement le composé m-dihalo-aromatique a réagi principalement, et ensuite l'achèvement de la réaction à une température d'au moins 172°C mais ne dépassant pas 280°C.

2. Procédé suivant la revendication 1, dans lequel les quantités du composé p-dihalo-aromatique et du composé m-dihalo-aromatique sont respectivement de 40 à 95 % en mole et 5 à 60 % en mole par rapport au total des deux composés.

3. Procédé suivant la revendication 1, dans lequel les quantités du composé p-dihalo-aromatique et du composé m-dihalo-aromatique sont respectivement de 60 à 95 % en mole et de 5 à 40 % en mole par rapport au total des deux composés.

4. Procédé suivant la revendication 1, dans lequel le composé p-dihalo-aromatique et le composé m-dihalo-aromatique sont respectivement le p-dichlorobenzène et le m-dichlorobenzène.

5. Procédé suivant la revendication 1, dans lequel la réaction est réalisée à une température de 140°C à 170°C dans le premier stade et à une température de 172°C à 260°C dans le second stade.
